Europäisches Patentamt

(19) European Patent Office

Office européen des brevets

(11) EP 0 709 289 B1

## (12) EUROPEAN PATENT SPECIFICATION

(45) Date of publication and mention
of the grant of the patent:
**03.12.1997 Bulletin 1997/49**

(51) Int. Cl.⁶: **B65B 23/14**, B65G 57/32

(21) Application number: **95103568.2**

(22) Date of filing: **13.03.1995**

(54) **A system for forming stacks of articles, for example in plants for the automatic packaging of food products**

Vorrichtung zur Bildung von Produktstapeln, z.B. in Anlagen zum automatischen Verpacken von Nahrungsmitteln

Dispositif pour former des piles de produits, p. ex. dans des installations d'emballage automatique de produits alimentaires

(84) Designated Contracting States:
**CH DE ES FR GB LI NL SE**

(30) Priority: **21.10.1994 IT TO940847**

(43) Date of publication of application:
**01.05.1996 Bulletin 1996/18**

(73) Proprietor: **CAVANNA S.p.A.**
**I-28077 Prato Sesia Novara (IT)**

(72) Inventor: **Francioni, Renzo**
**I-28077 Prato Sesia (Novara) (IT)**

(74) Representative:
**Bosotti, Luciano et al**
**c/o JACOBACCI & PERANI S.p.A.**
**Corso Regio Parco, 27**
**10152 Torino (IT)**

(56) References cited:
**EP-A- 0 521 428**     **DE-A- 1 927 076**
**DE-A- 2 823 690**     **DE-B- 1 045 892**
**FR-A- 1 455 230**     **GB-A- 1 301 411**
**US-A- 2 815 848**

## Description

The present invention tackles the general problem of forming stacks of articles and has been developed with particular concern for its possible use in plants for the automatic packaging of food products such as, for example, confectionery.

In this field there is very often a need to form stacks of superposed flat articles, that is superposed in a direction perpendicular to their main dimensions (for example when one is dealing with flat products such as biscuits, crackers etc).

Various solutions to this problem have been proposed in the art. For example European Patent Application EP-A-0521428 in the name of the same applicants as the present application provides for the articles intended to be stacked to be supplied in sequence to a wheel structure around the periphery of which are segments located in a cyclic sequence at different radial distances from the axis of rotation of the wheel structure. The articles are supplied to the periphery of the wheel structure in such a way that each cooperates with one of the segments and is transferred to one of a plurality of slide surfaces arranged one above another at the outlet of the wheel structure. At the end of their sliding movement along the respective slide surfaces, the articles fall one on top of another so as to form the desired stack.

The invention of the above application is usable ideally for the formation of stacks including a fairly small number of superposed articles.

Specifically, the present invention relates to an arrangement according to the preamble of Claim 1, which is known, e.g. from DE-A-2 823 690 and aims to enable stacks including a large number of articles (for example ten or more) to be formed.

In tackling this problem it is necessary to take account of the numerous determining factors which arise in packaging plants, particularly when one is dealing with food products such as confectionery products.

In the first place, the geometric characteristics of the articles which are to be stacked are not usually entirely regular: one thinks, for example, of products such as crackers or biscuits which, due to the fact that they are made by baking in an oven and are at least partially raised, have more or less marked surface and dimensional irregularities.

The irregular surfaces and dimensions of the articles usually make it practically impossible to handle large numbers of articles simultaneously, for example to draw them from a supply hopper. This is even truer the higher the speed of operation of the plant.

It is also important for the devices used to form the stacks to have a high degree of flexibility, for example with regard to the possibility of varying the number of articles in each stack rapidly - without the need for complicated adjustments or modifications.

In some applications it will even be wished to vary the number of articles in each stack in real time so as to take account, for example, of the fact that the dimensions of the articles which are stacked may vary with time. For example, in the case of baked products such as biscuits or crackers, it may happen that - for various reasons - several lots of products are subject to greater raising and thus are higher or thicker than other products which are not subject to this phenomenon to such an extent. If it is wished to keep the height of the stack almost the same it is thus necessary to reduce the number of articles in the stack itself.

The object of the present invention is to provide a solution which answers the above requirements as well as possible.

According to the present invention, this object is achieved by apparatus having the further characteristics claimed specifically in Claim 1.

The invention will now be described purely by way of nonlimitative example, with reference to the appended drawings, in which:

- Figure 1 is a general perspective view, partially exploded for clarity of illustration, showing one possible embodiment of apparatus of the invention,
- Figure 2 is a side elevational view illustrating the characteristics of the apparatus of the invention in greater detail,

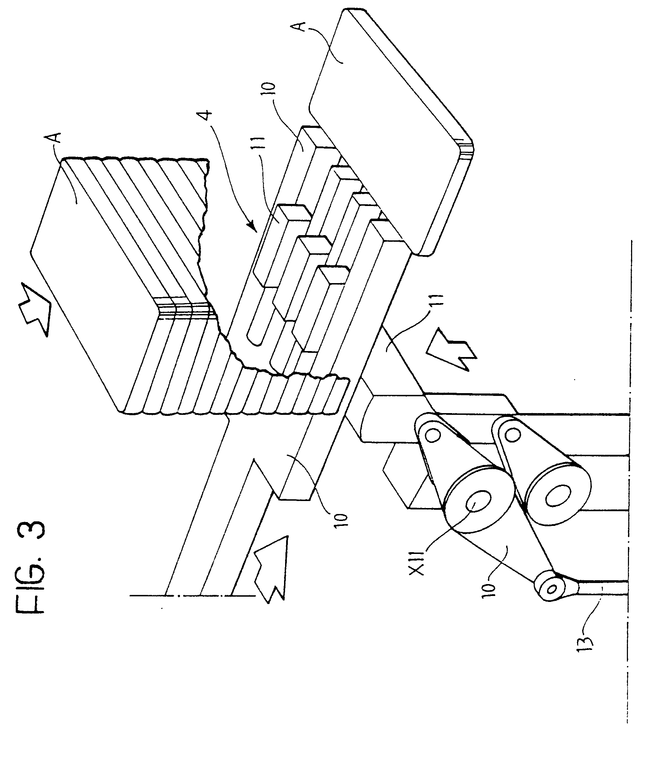

- Figure 3 is an enlarged view of the part of Figure 2 indicated by the arrow III, and
- Figure 4 illustrates, in particular, the output stage of the apparatus of Figure 1, taken on the arrow IV of Figure 1.

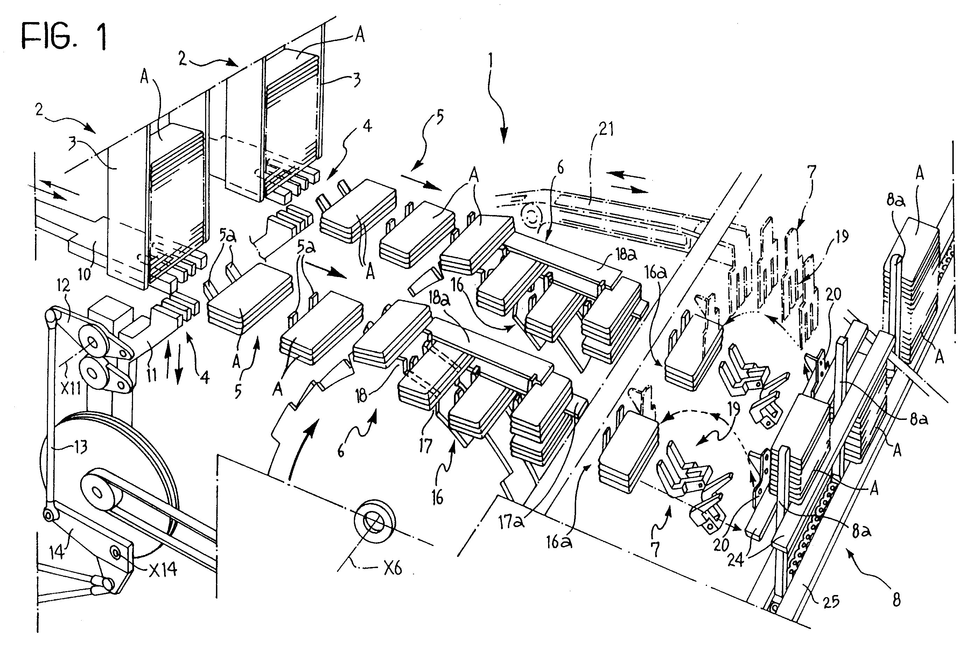

In Figure 1, apparatus in accordance with the invention for forming stacks of articles is generally indicated 1.

In the description below, explicit reference will be made to apparatus 1 intended to be used to form stacks of articles A constituted, in the embodiment illustrated, by products such as crackers or biscuits (without this being understood as a limitation on the scope of the patent).

One is concerned, in general, with generally flat articles intended to be stacked flat, that is, superposed in a direction perpendicular to their major dimensions. The stack which it is wished to obtain include a fairly high number of articles A, typically around 10.

As is better seen from the appended drawings, the apparatus 1 has a modular structure in that it includes a plurality of lines or paths 2 alongside each other: in the embodiment illustrated in Figure 1, there are two of these lines but there could be any number of them.

Each of the lines 2 includes a store 3 constituted, in the embodiment illustrated, by a vertical hopper in which the articles A to be stacked are accumulated placed flat, one on top of another, so that they fall gradually, under gravity (still in their flat orientation) towards a respective expulsion assembly 4 located at the lower end of the hopper 3 itself.

The function of each expulsion assembly 4 (the structure of which will be explained more fully below) is to expel a selected set of articles A from the bottom of the respective hopper 3, the set including a selectively predetermined number of the articles A.

The choice of the term "set" is deliberate in that - as will be explained further below - in some operating conditions the expulsion assembly 4 may carry out a cycle in which it does not expel any article A: in this case, the set of articles A taken from the hopper 3 is an empty set (set including a number of elements equal to zero).

The expulsion assembly 4 transfers the articles A taken from the bottom of the hopper 3 to a conveyor 5. This latter advances the sets of articles A taken cyclically from the hopper 3 to equipment generally indicated 6 for forming intermediate stacks.

The essential structure of the equipment 6 corresponds to that of the equipment illustrated in European Patent Application EP-A-0521428 to which the reader is referred for a full description of its operation.

At the output of the equipment 6, the articles A are collected in intermediate stacks (which will be termed "groups" below), each of which results from the superposition of a certain number of sets of articles A (typically two or three) taken from the bottom of the hopper 3.

The groups of articles formed at the output of the equipment 6 are transferred by a transfer device 7, the structure of which will be explained more fully below, to an output conveyor 8 which moves in a direction perpendicular to the directions (substantially parallel to each other) in which the articles A expelled from the hoppers 3 advance along the lines or paths 2.

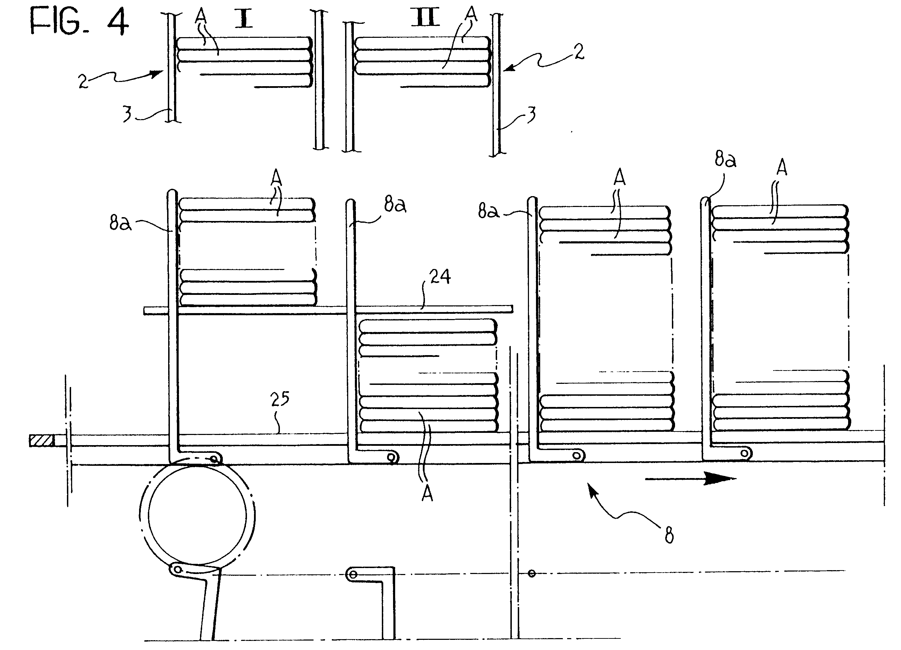

As may best be appreciated from the end view of Figure 4, the output ends of the various lines 2 are not all at the same height relative to the slide surface of the output conveyor 8.

Thus, from the point of view of Figure 1, the output end of the line 2 which is in a first plane is in a higher position than the output end of the line 2 which is on the bottom. Naturally this is all with reference to the direction of advance of the conveyor 8 which moves away from an observer of the apparatus 1 in Figure 1. This arrangement means that, as will be explained more fully below, the various groups of articles A which leave the output end of the lines 2 are placed on top of each other on the conveyor 8 so as to result in the desired stacks of articles A being output by the apparatus 1.

Naturally, the arrangement illustrated in the drawings with reference to two lines or paths 2, with provision for the superposition of two groups to form one stack at the output, can be modified with regard to the number of the groups which are superposed (for example, when it is wished to superpose three groups to form a stack, the output ends of three lines or paths at three different heights are provided), and with regard to the possibility of arranging the output ends of a large number of lines or paths 2 (for example four) so as simultaneously to form several stacks of respective groups of articles A in different positions on the conveyor 8.

The structure of the apparatus 1 of the invention is thus such that the number of articles k in the stacks formed at the output of the apparatus can generally be expressed by an equation of the type

$$K = \sum_{j=1}^{n} G_j$$

where $G_j$ indicates the number of articles superposed in each group output by the respective line 2 of order j. The number of lines may vary from two (as in the example illustrated, i.e. j = 1, 2) to a greater number whenever j = 1, 2,..., n.

The number $G_j$ of articles in each group at the output of the line 2 of order j can, in turn, be expressed by an equation of the type

$$G_j = \sum_{k=1}^{i} A_{kj}$$

where $A_{kj}$ = 0, 1, 2,... indicates the number of articles A in the set taken at the time by the expulsion assembly 4 from the hopper 3 upstream of the line 2 of order j.

From the above it will be clear that the solution of the invention enables extreme elasticity and a flexibility to be achieved in the formation of the stacks.

Several specific examples of possible uses of the apparatus of the invention will be given below, supposing the use of increasing numbers of lines or paths 2.

Two-line apparatus

One is dealing essentially with the configuration illustrated in Figure 1.

Whenever it is wished to form stacks of, for example, nine articles, it is possible to proceed by making one of the lines 2 supply the conveyor 8 located at the output of the apparatus with groups of five articles for superposition on groups of four articles supplied by the other line 2. In order to avoid the taking of articles from the hoppers 3 being unbalanced, it is possible to make the expulsion assemblies 4 operate (according to criteria which will be explained more fully below) so that each line or path 2 provides the output conveyor 8, in alternating sequence, with a group of four articles followed by a group of five articles in turn followed by a group of four articles and so on. Naturally the other line or path 2 is operated in a complementary manner so as to supply a group of five articles for superposition on a group of four articles supplied by the first line and vice versa.

The periodicity of the alternating sequence of the groups of four and five articles on the lines 2 may naturally be other than one: for example, each line may supply two groups of four articles followed by two groups of five articles, in turn followed by two groups of four articles and so on.

Whatever solution is adopted to form a group of five articles, supposing group-forming equipment 6 is available including a wheel with three levels of superposition, the expulsion assembly 4 is operated so as to remove, in sequence from the respective hopper 3, a set of two articles followed by another set of two articles followed by a set comprising only a single article. All this leads to a group including two + two + one = five articles A being obtained at the output of the group-forming equipment 6. Naturally the sequence two + two + one is not imperative: the expulsion assembly 4 may be operated for example so as to expel two + one + two articles A, or any other combination of numbers, if this is preferred for any reason.

In order to form a group of four articles A, still with three-level group-forming equipment 6, that is, equipment which can combine three sets in a group, the expulsion assembly 4 may be operated so as to remove sets including two articles, two articles and no articles, (empty set) respectively so as to obtain a group including two + two + zero = four articles A superposed at the output of the group-forming equipment 6. Again, it is possible to modify the sequence of expulsion of the sets, for example by making use of a sequence of the type two + zero + two or by adopting different criteria, for example by expelling two + one + one = four articles A or any other combination of these numbers.

### Three-line apparatus

Supposing it is wished to form stacks of twelve superposed articles A, recourse may be made to three lines (such as the lines 2 of Figure 1) located alongside each other and arranged to supply the conveyor 8 located at the output with groups of four articles for superposition in threes so as to obtain the desired number of three x four = twelve articles A at the output of the conveyor 8.

The groups of four superposed articles may be formed with the use of two-level stacking equipment 6, the expulsion assemblies 4 being operated so as to steadily remove two superposed articles A from the respective hopper 3 in each cycle.

Whenever it is wished to change to the formation of stacks of ten superposed articles A it is possible to make the various lines 2 form groups of three and four articles A so as to form stacks of four + three + three = ten articles A as a result of their superposition on the three planes of the output conveyor 8.

The groups including four and three pieces respectively are formed in the equipment 6. Supposing now that two-level equipment is available, this result is achieved by the superposition of sets of two articles and one article respectively taken by the expulsion assembly 4 from the respective hopper 3 so as to form selectively groups of two + two = four and two + one = three pieces respectively.

The adaptation of the arrangement just described to the formamtion of stacks of only nine articles instead of ten may be achieved practically immediately by operating the expulsion assemblies 4 so as to carry out an expulsion sequence in which alternate sets of two articles and one article are removed continually and transferred to the stacking equipment 6 to form groups of three articles A which are superposed in three groups of three on the conveyor 8 with the formation of the desired stacks of nine articles. It will be appreciated that this modification may be carried out, if required, effectively in real time, without interrupting the operation of the device, for example to adapt it to an increase in the height of the articles A being handled.

### Four-line apparatus

The increase in the number of lines (that is of the lines 2 paired with each other) is dictated by the need to adapt the operation of the apparatus to stations upstream of it (for example an oven) as well as possible in order to achieve correct apportioning of the flows to be given/obtained in the environment of the apparatus itself. In general, then, an increase in the number of lines has been found to be more beneficial the greater the number of articles A in a stack.

For example, stacks of twelve superposed articles A may be obtained by the superposition, on a two-level output conveyor 8 (one of which is served by one pair of two lines and the other by the other two lines and hence, in practice, by doubling of the two-line configuration illustrated in Figure 1) of groups of six superposed articles A obtained by the superposition, in three-level group-forming equipment 6, of sets of articles removed by the assemblies 4 from the hoppers 3 and all including two superposed articles A in each set.

The configuration just described may be converted to form stacks of ten articles A almost immediately by making the superposed groups include not six but five articles. This is achieved by the superposition, in the three-level group-forming equipment 6, of sets withdrawn by the expulsion assemblies 4 from the hoppers 3 including two, two and one article so as to obtain, by the superposition, groups of two + two + one = five articles A. Naturally, again in this case, the sequence in which the removal of a single article A is interposed between cycles of removal of two articles A can be varied at will.

The same configuration may be converted rapidly to form stacks of nine articles A by making one of the two superposed groups include not five but only four articles A. In this case it suffices to operate in such a manner that, where previously the expulsion assembly 4 removed one article A from the hopper 3, the assembly 4 is regulated so as not to remove any article: the successive superposition of three sets including, respectively, two articles, two articles, and no articles A thus results in the formation of a group comprising two + two + zero = four articles in the equipment 6.

## Description of the structure of each path or line 2

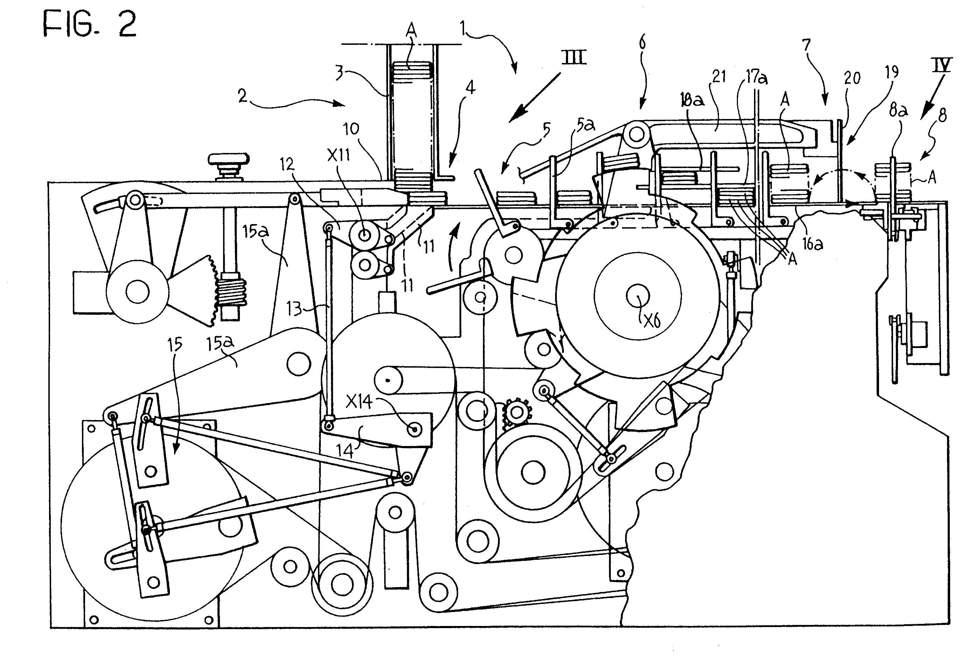

As is best seen from a comparison of Figures 1 and 2, each expulsion assembly 4 includes two forked elements 10 and 11 movable horizontally and vertically respectively, the numbers of their tines and their relative positions being arranged so that they can interpenetrate each other.

In practice the element 10 is a pusher element which (under the action of a reciprocating drive device of known type indicated 15 in Figure 2) can effect a reciprocating to and fro movement through the lower region of the hopper 3 so as to urge a given number of articles A which are on the bottom of the stack accumulated in the hopper 3 towards the conveyor 5.

More particularly, the height of the pusher element 10 (this height being measured in the direction in which the stack in the hopper 3 extends) corresponds to the thickness of a given number of articles A in the hopper 3 itself.

For example, by way of explanation, one can consider the condition in which the height of the pusher element 10 corresponds to the thickness of three articles A. This means that, in penetrating the hopper 3, the horizontal pusher element 10 could supply three articles A from the bottom of the stack in the hopper 3 to the conveyor 5.

The number of articles A supplied to the conveyor 5 at any time (corresponding to the number of elements in the "sets" referred to above) is, however, determined, in a selective manner, by the position of the vertical fork element 11.

In order to understand the operation of this element one may think of this simply as a fork whose tines are staggered relative to those of the pusher element 10 so that they do not interfere with the penetrating movement of the pusher element 10 itself into the lower part of the hopper 3. The ends of the tines of the element 11 may thus support the stack of articles A located in the hopper 3 itself at a predetermined height relative to the horizontal path of movement of the pusher 10.

When, (as illustrated schematically in full outline in Figure 2) the element 11 is lowered into a position in which it does not interfere with the bottom of the stack of articles A in the hopper 3, the horizontal pusher 10 carries out its function to the full by expelling, at each travel, the maximum number of articles A on which it can act from the hopper 3: with reference to the example given above, three articles A.

When, on the other hand, the element 11 is raised to its highest position (that illustrated in broken outline in Figure 2) it is able to keep the stack of articles A in the hopper 3 totally out of the way of the penetrating path of the pusher 10. In these conditions, the penetration of the pusher 10 into the lower part of the hopper 3 does not cause any article A to be expelled onto the conveyor 5.

If the position of the element 11 is adjusted and selected so as to be between the lowest and highest positions described above, it is possible to modify the position of bottom of the stack of articles A in the hopper 3 so as to vary selectively the number of articles A which the pusher 10 pushes towards the conveyor 5 when it penetrates the lower part of the hopper 3.

Thus, starting from the highest position, in which no article A is expelled, if the position of the element 10 is lowered through a distance approximately equal to the thickness of an article A, the penetrating travel of the pusher 10 causes one article to be expelled towards the conveyor 5. If the element 11 is lowered by a further amount equal to this thickness, the pusher 10, in its penetrating path into the hopper 3, acts on two articles A to cause their expulsion towards the conveyor 5. In the lowest position, three articles A are exposed simultaneously to the action of the pusher 10 and are therefore pushed towards the conveyor 5.

The embodiment illustrated refers to a pusher 10 which has a height corresponding to the thickness of three articles A: naturally this choice is not essential; the height in question may be increased or reduced while the same operating mechanism is retained.

The element 11 can thus be formed so that its vertical position relative to the lower end of the hopper 3 can be regulated in accordance with a regulating signal given by a control unit (such as a programmable logic controller or PLC - not illustrated) which - according to criteria well known in themselves and which do not need to be explained here since they are not relevant for the purposes of an understanding of the invention - supervises the operation of the whole of the apparatus 1.

Preferably, however, the element 11 is formed so as to effect a cyclical upwards and downwards movement which is synchronated and coordinated with the reciprocating movement of the horizontal pusher element 10.

In other words, the element 11 which supports the bottom of the stack of articles A in the hopper 3 is not in a fixed position (at a height which can be adjusted selectively in accordance with the number of articles A which it is desired to expel from the hopper 3 at the time) but, instead, effects a cyclic up and down movement, the upper travel-limit position of which can be regulated selectively in dependence on the number of articles A it is wished to expel from the hopper 3.

For example, when it is wished to make the pusher 10 penetrate the hopper but not cause the expulsion of any article A, the upper travel-limit position of the reciprocating movement of the element 11 is regulated to correspond with the position illustrated in broken outline in Figure 2. If, however, it is wished to expel one article, this upper travel limit position is adjusted so as to be spaced beneath the position illustrated in broken outline by distance corresponding to the thickness of an article A. If it is wished to expel two articles, the upper travel limit position is again lowered through a distance corresponding to the thickness of an article A, and so on.

The fact that the element 11 is not stationary (even though at a selectively regulable height) but goes up and down at a frequency corresponding to the frequency of the cycle in which the articles A are expelled from the hopper 3, means that the stack of articles A in the hopper 3 is not held in a fixed position but is in continuous movement: this avoids any blocking or jamming of the articles A within the hopper 3.

This result may be achieved by supporting the element 11 on an articulated parallelogram structure actuated by a crank 12 to which drive is transmitted through a vertical drive rod 13 supported by a reciprocable arm 14 pivotable about a respective horizontal axis X14. The said drive assembly is driven, in the embodiment illustrated, by the same drive unit 15 as that which, through a combination of pivoted arms 15a, drives the horizontal pusher element 10 so as to ensure the necessary synchronisationn (working in phase) of the respective reciprocating movements. All this includes the possibility of regulating the amplitude of the upward movement of the arm 14 (and hence the upper travel-limit position reached by the element 11) by the use of regulating elements such as a mechanism (of known type) with eccentrics not specifically illustrated in the drawings.

For a full description of the operation of the group-forming equipment 6 and of the conveyor 5 which it supplies, reference may usefully be made to the description of European Patent Application EP-A-0521428.

As already stated, the heart of the equipment 6 is a wheel structure (preferably constituted by a pair of discs located a certain distance apart so as to allow the nibs or drive structures 5a of the conveyor 5 to pass through the wheel structure 6 itself) with segments located in a cyclic sequence around its periphery at different radial distances from the axis of rotation X6 of the wheel itself. More particularly, the wheel structures illustrated in Figures 1 and 2 are intended to enable three sets of articles A, supplied successively by the conveyor 5, to be superposed on each other.

If one imagines looking at the wheel structure in the sense opposite the sense of rotation of the wheel structures 6, which is clockwise with reference to the observation point of Figure 1, the wheel can be seen to have a sequence of segments around its periphery comprising a "low" segment, an "intermediate" segment and a "high" segment, on which respective sets of articles A are deposited in succession as a result of the relative upward movement of the periphery of the wheel structure 6 with respect to the horizontal path of movement of the articles A on the conveyor 5.

Each set which is placed on a "low" segment (one of these is indicated schematically at 16 in Figure 1) is transferred on to a conveyor surface 16a which lies in a position at a generally lower level than two further conveyor surfaces indicated 17a and 18a which are served respectively by the "intermediate" segments 17 and "high" segments 18 of the wheel structure 6.

The slide surfaces 16a, 17a and 18a have longitudinal apertures (see the description given in European patent application EP-A-0521428 again in this respect) to allow the nibs 5a of the conveyor 5 (nibs whose length is at least slightly greater than the distance between the lowermost sliding surface 16a and the uppermost sliding surface 18a) to fulfil their driving action which is to cause the gradual vertical aligning of the sets of articles which advance on the various surfaces 16a, 17a and 18a. At the output end of the group-forming equipment 6 (a position in which the slide surfaces 16a, 17a and 18a stop), all this results in the sets which are on the upper slide surfaces planes 17a and 18a falling onto the set which is on the lowest slide surface 16a so as to form the desired group.

At this point, the groups formed are taken by the pusher elements 19 which have the structure best illustrated in the elevational view of Figure 2.

As may also be seen, the pusher element 19 has a general configuration which can be likened essentially to that of a rake or, more particularly, a croupier's rake and has a pusher blade 20 mounted on an arm 21 which extends generally horizontally. The arm is mounted on the framework of the apparatus so as to be able to effect, under the action of a drive unit (not illustrated but essentially like the unit 15 mentioned above) a to and fro reciprocating movement substantially like the movement of a link mechanism.

More particularly, the pusher element 19 can move the blade 20 in a generally orbital path including a lower horizontal path (active stroke), in which the blade 20 moves (from left to right with reference to the drawings) in a generally straight line between the output end of the group-forming equipment 6 and the output conveyor 8, and an arcuate path (return travel) in the course of which the blade 20, having pushed the group of articles A just taken from the group-forming equipment onto the output conveyor 8, moves upwards and backwards (from right to left in the drawings) to return to the output station of the group-forming equipment 6 to be inserted downwardly against the shoulders of a group of articles A just formed.

As already stated above and as best seen in the end view of Figure 2, the output ends of the various lines 2, and hence the various pusher devices 19, are arranged at staggered heights and thus have respective supply surfaces for receiving the products, indicated 24 and 25, located at different heights.

The output conveyor 8, the nibs (indicated 8a) of which have a considerable vertical extent, thrusts the articles A collected in groups at the outputs of the lines 2 so that they slide along the slide surfaces 24 and 25, in a manner substantially similar to that described above with reference to the formation of the groups from the sets of articles which slide on the surfaces 16a, 17a and 18a.

This is true particularly with regard to the arrangement of longitudinal slots in the slide surfaces 24 and 25 which allow the passage of the nibs 8a.

Naturally, the principle of the invention remaining the same, the details of construction and forms of embodiment may be varied widely with respect to those described and illustrated without thereby departing from the scope of the present invention as defined by the appended claims.

**Claims**

1. Apparatus for forming stacks of articles (A) superposed in a direction perpendicular to their main dimensions, including:

   - storage means (3) for accumulating the articles (A) to be stacked with associated removal means (10, 11) for taking respective sets of the articles (A) cyclically from the storage means (3), and
   - group-forming means (5, 6) in which a plurality of the sets of articles (A) are superposed on each other so as to form groups of stacked articles, (A),
   characterised in that:
   - group-accumulation means (8) are provided, in which several groups of stacked articles (A) are superposed on each other to form the said stacks of articles (A) as a result of the superposition of the said groups, and
     a plurality of group-forming means (6) are provided which supply respective groups of superposed articles (A) to the group-accumulation means (8); each of the group-forming means (6) of the said plurality having a respective outlet end located at a different height relative to the group accumulation means (8) at a different height from another of the group-forming means (6); the arrangement being such that, on the group accumulation means (8), at least one group of stacked articles (A) formed by one group-forming means (6) is superposed on at least one other group of stacked articles (A) formed by another combination of group forming means (6), and
     the group accumulation means (8) include at least two slide surfaces (24, 25) located at an upper level (24) and a lower level (25) respectively for receiving respective groups of stacked articles (A), and drive means (8a) for making the respective stacked groups of articles (A) slide on the slide surfaces (24, 25) until the groups of articles (A) on the higher slide surface (24) are brought into a position in which they fall on to the groups of articles (A) on the lower slide surface (25).

2. Apparatus according to Claim 1, characterised in that the storage means are in the form of at least one hopper (3) which, in use, receives a respective stack of the articles (A).

3. Apparatus according to Claim 2, characterised in the removal means comprise a pusher element (10) which can effect a penetrating movement into the at least one hopper (3), the penetrating movement being such as to cause a respective set of the articles (A) to be expelled from the hopper (3) in use.

4. Apparatus according to Claim 3, characterized in that a retaining element (11) is associated with the at least one hopper (3) for supporting the stack of articles (A) in the hopper (3), in use, in a plurality of predetermined selected positions; the position of the retaining element (11) determining the position at which the pusher element (10) acts on the articles (A) in the at least one hopper (3) so as to determine selectively the number of articles (A) in the set of articles (A) expelled from the hopper (3) by the pusher element (10) as a result of its penetrating movement.

5. Apparatus according to Claim 4, characterized in that the retaining element (11) can be located in at least one position in which the articles (A) in the at least one hopper (3) in use are not affected by the penetrating movement of the pusher element (10) whereby the penetrating movement does not cause the expulsion of any article (A) from the at least one hopper (3).

6. Apparatus according to Claim 4 or Claim 5, characterized in that the pusher element (10) and the retaining element (11) both have generally forked configurations with tines staggered relative to each other so as to allow the mutual interpenetration of the pusher element (10) and the retaining element (11) without interference.

7. Apparatus according to any one of Claims 4 to 6, characterised in that the retaining element (11) has associated drive means (13 to 15) which drive it in a cyclic movement relative to the at least one hopper (3) in synchronism with the movement of the pusher element (10), the number of articles (A) in the set expelled from the hopper (3) as a result of the penetrating movement of the pusher element (10) being determined by a travel-limit position of the cyclic movement of the retaining element (11).

8. Apparatus according to any one of the preceding claims, characterised in that the group-forming means comprise:

   - a plurality of slide surfaces (16a, 17a, 18a) which can receive respective flows of the sets of articles (A) taken from the storage means (3), and
   - at least one wheel structure (6) provided around its periphery with a cyclic sequence of segments (16, 17, 18) located at different radial distances from the axis of rotation (X6) of the wheel structure (6); there being the same number of segments (16, 17, 18) as the number of slide surfaces (16a, 17a, 18a) and each being at a distance from the axis of rotation (X6) of the wheel structure (6) equal to the distance between this axis of rotation (X6) and the plane in which a respective one of the slide surfaces (16a, 17a, 18a) lies.

9. Apparatus according to Claim 8, characterised in that it includes entrainment means (5) between the at least one wheel structure (6) and the storage means (3) for supplying an ordered flow of sets of the articles (A) taken from the storage means (3) to the periphery of the at least one wheel structure (6) whereby each set of articles (A) cooperates with a respective one of the segments (16, 17, 18) so as to be transferred to a respective one of the slide surfaces (16a, 17a, 18a).

10. Apparatus according to Claim 9, characterised in that the entrainment means (5) include a conveyor with entrainment structures (5a) having a length at least slightly greater than the distance between the highest (18a) and the lowest (16a) of the superposed slide surfaces.

11. Apparatus according to any one of the preceding claims, characterised in that it includes reciprocating pusher means (19) operating downstream of the group-forming means (6) for guiding the groups of articles (A) selectively towards the group-accumulation means (8).

12. Apparatus according to Claim 11, characterised in that the pusher means comprise rake means (20) which can reciprocate along a path including a first, substantially straight portion in which the rake means (20) push the groups of articles (A) towards the group- accumulation means (8) and a return portion in which the rake means (20) move upwardly, away from the group-accumulation means (8) to return to the group-forming means (6) to receive a further group of superposed articles (A).

13. Apparatus according to Claim 12, characterised in that the rake means (20) are mounted on a motor-driven pivoted arm (21) supported by two pivotable arms (22, 23) of different lengths arranged in a link-like configuration.

**Patentansprüche**

1. Vorrichtung zur Bildung von Stapeln an Artikeln (A), die in einer zu ihren Hauptabmessungen senkrechten Richtung übereinandergeschichtet werden, umfassend:

• Lagermittel (3) zum Sammeln der zu stapelnden Artikel (A) mit zugehörigen Entnahmemitteln (10, 11), um aus den Lagermitteln (3) periodisch jeweilige Sets der Artikel (A) zu entnehmen, und

• gruppenbildende Mittel (5, 6), in denen eine Vielzahl der Sets von Artikeln (A) jeweils übereinandergeschichtet werden, um so Gruppen gestapelter Artikel (A) zu bilden, dadurch gekennzeichnet, daß

• Gruppensammelmittel (8) vorgesehen sind, in denen mehrere Gruppen gestapelter Artikel (A) jeweils übereinandergeschichtet werden, um die Stapel von Artikeln (A) als Ergebnis des Übereinanderschichtens der Gruppen zu bilden, und

• eine Vielzahl gruppenbildender Mittel (6) vorgesehen sind, die den Gruppensammelmitteln (8) jeweilige Gruppen übereinandergeschichteter Artikel (A) zuführen; wobei jedes gruppenbildende Mittel (6) aus der Vielzahl jeweils ein Auslaßende aufweist, das auf unterschiedlicher Höhe bezüglich der Gruppensammelmittel (8) angeordnet ist, in unterschiedlicher Höhe zu einem weiteren gruppenbildenden Mittel (6); wobei die Anordnung so ist, daß auf den Gruppensammelmitteln (8) mindestens eine Gruppe gestapelter Artikel (A), die durch ein gruppenbildendes Mittel (6) gebildet wurde, über mindestens eine andere Gruppe gestapelter Artikel (A), die durch eine weitere Kombination gruppenbildender Mittel (6) gebildet wurde, geschichtet wird, und

• die Gruppensammelmittel (8) mindestens zwei Gleitoberflächen (24, 25) umfassen, die auf einem oberen Niveau (24) bzw. einem niedrigeren Niveau (25) angeordnet sind, um jeweils Gruppen gestapelter Artikel (A) aufzunehmen, und Antriebsmittel (8a), um jeweils gestapelte Gruppen von Artikeln (A) auf den Gleitoberflächen (24, 25) gleiten zu lassen, bis die Gruppen von Artikeln (A) auf der höheren Gleitoberfläche (24) in eine Position gebracht werden, in der sie auf die Gruppen von Artikeln (A) auf der niedrigeren Gleitoberfläche (25) fallen.

2. Vorrichtung nach Anspruch 1, dadurch gekennzeichnet, daß die Lagermittel von mindestens einem Bunker (3) gebildet sind, der, in Verwendung, jeweils einen Stapel der Artikel (A) aufnimmt.

3. Vorrichtung nach Anspruch 2, dadurch gekennzeichnet, daß die Entnahmemittel ein Schieberelement (10) umfassen, das eine Durchdringungsbewegung in den mindestens einen vorgesehenen Bunker (3) bewirken kann, wobei die Durchdringungsbewegung verursacht, daß jeweils ein Set der Artikel (A) aus dem Bunker (3), in Verwendung, ausgestoßen wird.

4. Vorrichtung nach Anspruch 3, dadurch gekennzeichnet, daß ein Rückhaltelement (11) mit dem mindestens einen vorgesehenen Bunker (3) verbunden ist, um den Stapel von Artikeln (A) im Bunker (3), in Verwendung, in einer Vielzahl vorbestimmter, ausgewählter Positionen zu stützen; wobei die Position des Rückhaltelements (11) die Position bestimmt, bei der das Schieberelement (10) auf die Artikel (A) in dem mindestens einen vorgesehenen Bunker (3) einwirkt, um so gezielt die Anzahl von Artikeln (A) im Set von Artikeln (A), das aus dem Bunker (3) durch das Schieberelement (10) als Ergebnis seiner Durchdringungsbewegung ausgestoßen wird, zu bestimmen.

5. Vorrichtung nach Anspruch 4, dadurch gekennzeichnet, daß das Rückhaltelement (11) an zumindest einer Position angeordnet sein kann, in der die Artikel (A) in dem mindestens einen Bunker (3), in Verwendung, nicht von der Durchdringungsbewegung des Schieberelements (10) betroffen werden, so daß die Durchdringungsbewegung keinen Ausstoß eines Artikels (A) aus dem mindestens einen Bunker (3) verursacht.

6. Vorrichtung nach Anspruch 4 oder Anspruch 5, dadurch gekennzeichnet, daß das Schieberelement (10) und das Rückhaltelement (11) beide etwa gabelförmige Konfigurationen aufweisen, wobei die Zinken zueinander so versetzt sind, daß sie ein gegenseitiges Durchdringen des Schieberelements (10) und des Rückhaltelements (11) ohne gegenseitige Beeinflussung erlauben.

7. Vorrichtung nach einem der Ansprüche 4 bis 6, dadurch gekennzeichnet, daß das Rückhaltelement (11) zugehörige Antriebsmittel (13 bis 15) aufweist, welche es in periodischer Bewegung bezüglich des mindestens einen vorgesehenen Bunkers (3) synchron mit der Bewegung des Schieberelements (10) antreiben, wobei die Anzahl von Artikeln (A) in dem aus dem Bunker (3) als Ergebnis der Durchdringungsbewegung des Schieberelements (10) ausgestoßenen Set durch eine Weg-Endposition der periodischen Bewegung des Rückhaltelements (11) bestimmt wird.

8. Vorrichtung nach einem der vorangehenden Ansprüche, dadurch gekennzeichnet, daß die gruppenbildenden Mittel umfassen:

   • ein Vielzahl an Gleitoberflächen (16a, 17a, 18a), die jeweils Ströme der Sets von den Lagermitteln (3) entnommenen Artikeln (A) aufnehmen, und
   • mindestens eine Radstruktur (6), die um ihre Peripherie mit einer periodischen Sequenz an Segmenten (16, 17, 18) versehen ist, die in unterschiedlichen radialen Abstanden von der Rotationsachse (X6) der Radstruktur (6) angeordnet sind; wobei die Anzahl an Segmenten (16, 17, 18) gleich der Anzahl an Gleitoberflächen (16a, 17a, 18a) ist und wobei jedes sich in einem Abstand von der Rotationsachse (X6) der Radstruktur (6) befindet, der gleich dem Abstand zwischen dieser Rotationsachse (X6) und der Ebene ist, auf der jeweils eine Gleitoberfläche (16a, 17a, 18a) liegt.

9. Vorrichtung nach Anspruch 8, dadurch gekennzeichnet, daß sie Eintragsmittel (5) zwischen der mindestens einen Radstruktur (6) und den Lagermitteln (3) umfaßt, um einen geordneten Strom von Sets der Artikel (A), die aus den Lagermitteln (3) entnommen werden, der Peripherie der mindestens einen Radstruktur (6) zuzuführen, wobei jedes Set von Artikeln (A) mit einem jeweiligen Segment (16, 17, 18) zusammenwirkt, um so zu jeweils einer Gleitoberfläche (16a, 17a, 18a) transferiert zu werden.

10. Vorrichtung nach Anspruch 9, dadurch gekennzeichnet, daß die Eintragsmittel (5) ein Fördermittel mit Eintragsstrukturen (5a) mit einer zumindest geringfügig größeren Länge als der Abstand zwischen der höchsten (18a) und der niedrigsten (16a) der übereinandergeschichteten Gleitoberflächen umfassen.

11. Vorrichtung nach einem beliebigen der vorangehenden Ansprüche, dadurch gekennzeichnet, daß sie sich hin- und herbewegende Schiebermittel (19) umfaßt, die den gruppenbildenden Mitteln (6) nachgeordnet wirken, um die Gruppen von Artikeln (A) gezielt zu den Gruppensammelmitteln (8) zu führen.

12. Vorrichtung nach Anspruch 11, dadurch gekennzeichnet, daß die Schiebermittel Rechenmittel (20) umfassen, die sich entlang eines Weges hin- und herbewegen können, der einen ersten, im wesentlichen geraden Teil umfaßt, in dem die Rechenmittel (20) die Gruppen von Artikeln (A) zu den Gruppensammelmitteln (8) schieben, und einen Rückkehrteil, in dem die Rechenmittel (20) sich aufwärts, weg von den Gruppensammelmitteln (8) bewegen, um zu den gruppenbildenden Mitteln (6) zurückzukehren, um eine weitere Gruppe übereinandergeschichteter Artikel (A) aufzunehmen.

13. Vorrichtung nach Anspruch 12, dadurch gekennzeichnet, daß die Rechenmittel (20) auf einem motorgetriebenen schwenkbaren Arm (21) montiert sind, der durch zwei schwenkbare Arme (22, 23) verschiedener Länge getragen wird, die in einer gelenksähnlichen Konfiguration angeordnet sind.

## Revendications

1. Dispositif pour former des piles de produits (A) superposés dans une direction perpendiculaire à leurs dimensions principales, comprenant :

   - des moyens de stockage (3) pour accumuler les produits (A) à empiler, avec des moyens associés d'enlèvement (10, 11) pour prélever cycliquement, des moyens de stockage (3), des ensembles respectifs des produits (A), et
   - des moyens (5, 6) de formation de groupes, dans lesquels une pluralité des ensembles de produits (A) sont superposés les uns sur les autres afin de former des groupes de produits empilés (A),
   caractérisé par le fait :
   - que sont prévus des moyens (8) d'accumulation de groupes, dans lesquels plusieurs groupes de produits empilés (A) sont superposés les uns sur les autres pour former lesdites piles de produits (A), du fait de la superposition desdits groupes, et
   - qu'il est prévu une pluralité de moyens (6) de formation de groupes qui délivrent, aux moyens (8) d'accumulation de groupes, des groupes respectifs de produits superposés (A) ; chacun des moyens (6) de formation de groupes de ladite pluralité présentant une extrémité respective de sortie située à une hauteur différente par rapport aux moyens (8) d'accumulation de groupes, à une hauteur différente par rapport aux autres moyens (6) de formation de groupes ; l'agencement étant tel que, sur les moyens (8) d'accumulation de groupes, au moins l'un des groupes de produits empilés (A), formé par l'un des moyens (6) de formation de groupes, soit superposé sur au moins un autre des groupes de produits empilés (A), formé par une autre combinaison de moyens (6) de formation de groupes, et
   - que les moyens (8) d'accumulation de groupes comportent au moins deux surfaces de glissement (24, 25) respectivement situées à un niveau supérieur (24) et à un niveau inférieur (25), pour recevoir des groupes respectifs de produits empilés (A), et des moyens d'entraînement (8a) pour faire glisser les groupes empilés respectifs de produits (A), sur les surfaces de glissement (24, 25), jusqu'à ce que les groupes de produits (A), placés sur la surface supérieure de glissement (24), soient amenés à une position dans laquelle ils tombent sur les groupes de produits (A) placés sur la surface inférieure de glissement (25).

2. Dispositif selon la revendication 1, caractérisé par le fait que les moyens de stockage revêtent la forme d'au moins une trémie (3) qui reçoit, en service, une pile respective des produits (A).

3. Dispositif selon la revendication 2, caractérisé par le fait que les moyens d'enlèvement comprennent un élément de poussée (10) pouvant accomplir un mouvement de pénétration dans la trémie (3) prévue au minimum, le mouvement de pénétration étant propre à provoquer, en service, l'expulsion d'un ensemble respectif des produits (A) hors de la trémie (3).

4. Dispositif selon la revendication 3, caractérisé par le fait qu'un élément de retenue (11) est associé à la trémie (3) prévue au minimum, de manière à supporter la pile de produits (A) dans la trémie (3), en service, dans une pluralité de positions sélectionnées prédéterminées ; la position de l'élément de retenue (11) déterminant la position dans laquelle l'élément de poussée (10) agit sur les produits (A), dans la trémie (3) prévue au minimum, en vue de déterminer sélectivement le nombre de produits (A) dans l'ensemble de produits (A) expulsé de la trémie (3), par l'élément de poussée (10), suite à son mouvement de pénétration.

5. Dispositif selon la revendication 4, caractérisé par le fait que l'élément de retenue (11) peut être situé dans au moins une position dans laquelle, en service, les produits (A) logés dans la trémie (3) prévue au minimum ne sont pas affectés par le mouvement de pénétration de l'élément de poussée (10), de sorte que le mouvement de pénétration ne provoque l'expulsion d'aucun produit (A) hors de la trémie (3) prévue au minimum.

6. Dispositif selon la revendication 4 ou la revendication 5, caractérisé par le fait que l'élément de poussée (10) et l'élément de retenue (11) possèdent, l'un et l'autre, des configurations pour l'essentiel fourchues avec des fourchons étagés les uns par rapport aux autres afin de permettre l'interpénétration mutuelle, sans interférence, de l'élément de poussée (10) et de l'élément de retenue (11).

7. Dispositif selon l'une quelconque des revendications 4 à 6, caractérisé par le fait que l'élément de retenue (11) présente des moyens associés d'entraînement (13 à 15) qui le mènent en un mouvement cyclique, par rapport à la trémie (3) prévue au minimum, en synchronisme avec le mouvement de l'élément de poussée (10), le nombre de produits (A), dans l'ensemble expulsé de la trémie (3) suite au mouvement de pénétration de l'élément de poussée (10), étant déterminé par une position de fin de course du mouvement cyclique de l'élément de retenue (11).

8. Dispositif selon l'une quelconque des revendications précédentes, caractérisé par le fait que les moyens de formation de groupes comprennent :

- une pluralité de surfaces de glissement (16a, 17a, 18a) pouvant recevoir des flux respectifs des ensembles de produits (A) prélevés des moyens de stockage (3), et
- au moins une structure (6) en tourniquet munie, autour de sa périphérie, d'une succession cyclique de segments (16, 17, 18) agencés à des distances radiales différentes à partir de l'axe de rotation (X6) de la structure (6) en tourniquet ; les segments (16, 17, 18) étant en nombre égal au nombre de surfaces de glissement (16a, 17a, 18a) et étant disposés chacun, à partir de l'axe de rotation (X6) de la structure (6) en tourniquet, à une distance égale à la distance comprise entre cet axe de rotation (X6) et le plan dans lequel se trouve l'une respective des surfaces de glissement (16a, 17a, 18a).

9. Dispositif selon la revendication 8, caractérisé par le fait qu'il présente des moyens d'acheminement (5) entre les moyens de stockage (3) et la structure (6) en tourniquet prévue au minimum, pour délivrer, à la périphérie de la structure (6) en tourniquet prévue au minimum, un flux séquentiel d'ensembles des produits (A) prélevés des moyens de stockage (3), de sorte que chaque ensemble de produits (A) coopère avec l'un respectif des segments (16, 17, 18), afin d'être transféré à l'une respective des surfaces de glissement (16a, 17a, 18a).

10. Dispositif selon la revendication 9, caractérisé par le fait que les moyens d'acheminement (5) comportent un convoyeur muni de pièces structurelles d'acheminement (5a) présentant une longueur au moins légèrement supérieure à la distance comprise entre la plus haute (18a) et la plus basse (16a) des surfaces de glissement superposées.

11. Dispositif selon l'une quelconque des revendications précédentes, caractérisé par le fait qu'il présente des moyens de poussée (19) à va-et-vient fonctionnant, en aval des moyens (6) de formation de groupes, pour guider sélectivement les groupes de produits (A) vers les moyens (8) d'accumulation de groupes.

12. Dispositif selon la revendication 11, caractérisé par le fait que les moyens de poussée comportent des moyens de râtissage (20) pouvant aller et venir le long d'une trajectoire comprenant un premier tronçon pour l'essentiel rectiligne, sur lequel les moyens de râtissage (20) poussent les groupes de produits (A) vers les moyens (8) d'accumulation de groupes ; et un tronçon de retour sur lequel les moyens de râtissage (20) accomplissent un mouvement ascendant les éloignant des moyens (8) d'accumulation de groupes, pour retourner aux moyens (6) de formation de groupes afin de recevoir un groupe suivant de produits superposés (A).

13. Dispositif selon la revendication 12, caractérisé par le fait que les moyens de râtissage (20) sont montés sur un bras pivotant (21) à entraînement motorisé, supporté par deux bras pivotants (22, 23) présentant des longueurs différentes et agencés en une configuration du type articulation.

FIG. 1

# FIG. 2

EP 0 709 289 B1

FIG. 3

FIG. 4

EP 0 709 289 B1